# EUROPEAN PATENT APPLICATION

(11) **EP 2 216 520 A1**
(43) Date of publication of application: **11.08.2010**
(21) Application number: 10151555.9
(22) Date of filing: 25.01.2010
(51) Int. Cl.: F01N 3/023, F01N 9/00, F01N 3/20, F02D 41/02, F01N 13/02

(54) **Exhaust gas purifying apparatus and method for regenerating particulate filter thereof**

(30) Priority: 09.02.2009 JP 2009027611
(71) Applicant: KABUSHIKI KAISHA TOYOTA JIDOSHOKKI, Kariya-shi, Aichi-ken 448-8671 (JP)
(72) Inventor: Koide, Naotaka, Kariya-shi Aichi 448-8671 (JP); Kato, Yoshifumi, Kariya-shi Aichi 448-8671 (JP)
(74) Representative: TBK-Patent

(57) **Abstract**

An exhaust gas purifying apparatus includes an exhaust pipe, a first oxidation catalyst, a selective catalytic reduction (SCR) catalyst, a urea water supply system, a particulate filter (PF) and a controller. Exhaust gas discharged from an internal combustion engine flows through the exhaust pipe. The first oxidation catalyst is disposed in the exhaust pipe. The SCR catalyst is disposed in the exhaust pipe downstream of the first oxidation catalyst. The urea water supply system supplies urea water to the SCR catalyst. The PF is disposed in the exhaust pipe downstream of the SCR catalyst. The controller stops supplying the urea water from the urea water supply system during regeneration of the PF, so as to supply the NO₂ formed in the first oxidation catalyst to the PF, wherein the NO₂ functions as an oxidizing agent to oxidize particulate matter (PM) deposited on the PF for regenerating the PF.

## Description

### BACKGROUND OF THE INVENTION

The present invention relates to an exhaust gas purifying apparatus and method for regenerating particulate filter thereof, and more particularly they are applied to an exhaust gas purifying apparatus using a urea selective catalytic reduction (SCR) system.

The urea SCR system has been developed for reducing nitrogen oxides (NOₓ) contained in exhaust gas discharged from a diesel engine. The urea SCR system includes a nitrogen monoxide oxidation catalyst (NO oxidation catalyst), a SCR catalyst disposed downstream of the NO oxidation catalyst, a urea water supply system and an ammonia oxidation catalyst disposed downstream of the SCR catalyst. In the NO oxidation catalyst, nitrogen monoxide (NO) is oxidized to form nitrogen dioxide (NO₂). In the SCR catalyst, NO_{X} and ammonia formed by the reaction of urea with water are reacted to form nitrogen and water. The urea water supply system supplies urea water to the SCR catalyst. In the ammonia oxidation catalyst, ammonia not reacted or not consumed in the SCR catalyst is oxidized. The urea SCR system for purifying NO_{X} may also include a diesel particulate filter (DPF) for reducing particulate matter (PM).

A conventional exhaust gas purifying apparatus including a urea SCR system and a DPF is disclosed in Japanese Patent Application Publication No. 2006-274986. In the conventional exhaust gas purifying apparatus, when PM deposited on the DPF reaches a predetermined amount, supply of urea water is stopped and diesel fuel (light oil) is supplied to exhaust gas for regenerating the DPF.

In the above-described conventional exhaust gas purifying apparatus, however, supply of diesel fuel for regenerating the DPF deteriorates fuel economy.

The present invention is directed to providing an exhaust gas purifying apparatus which can improve efficiency in the use of urea water without deteriorating fuel economy.

### SUMMARY OF THE INVENTION

In accordance with the present invention, an exhaust gas purifying apparatus includes an exhaust pipe, a first oxidation catalyst, a selective catalytic reduction (SCR) catalyst, a urea water supply system, a particulate filter (PF) and a controller. Exhaust gas discharged from an internal combustion engine flows through the exhaust pipe. The first oxidation catalyst is disposed in the exhaust pipe. The SCR catalyst is disposed in the exhaust pipe downstream of the first oxidation catalyst. The urea water supply system supplies urea water to the SCR catalyst. The PF is disposed in the exhaust pipe downstream of the SCR catalyst. The controller stops supplying the urea water from the urea water supply system during regeneration of the PF, so as to supply the NO₂ formed in the first oxidation catalyst to the PF, wherein the NO₂ functions as an oxidizing agent to oxidize particulate matter (PM) deposited on the PF for regenerating the PF.

The present invention also provides a method for regenerating a PF of an exhaust gas purifying apparatus. The exhaust gas purifying apparatus includes an exhaust pipe, a first oxidation catalyst, a SCR catalyst, a urea water supply system, a PF and a controller. Exhaust gas discharged from an internal combustion engine flows through the exhaust pipe. The first oxidation catalyst is disposed in the exhaust pipe for generating NO₂. The SCR catalyst is disposed in the exhaust pipe downstream of the first oxidation catalyst. The urea water supply system supplies urea water to the SCR catalyst. The PF is disposed in the exhaust pipe downstream of the SCR catalyst. The controller controls the urea water supply system. The method includes stopping supplying the urea water from the urea water supply system during regeneration of the PF, and supplying the NO₂ formed in the first oxidation catalyst to the PF, wherein the NO₂ functions as an oxidizing agent to oxidize PM deposited on the PF.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:

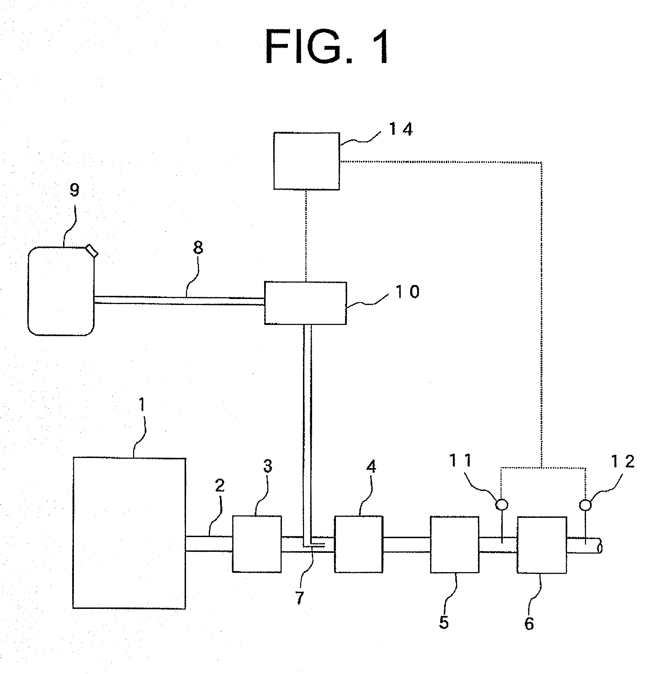

Fig. 1 is a schematic view showing an exhaust gas purifying apparatus according to a preferred embodiment of the present invention.

### DETAILED DESCRIPTION OF THE PREFERRED EMBODIMENTS

The following will describe an exhaust gas purifying apparatus according to a preferred embodiment of the present invention with reference to Fig. 1. Fig. 1 shows the exhaust gas purifying apparatus according to the preferred embodiment of the present invention. A diesel engine 1 is an internal combustion engine. The exhaust gas purifying apparatus includes an exhaust pipe 2, a nitrogen monoxide oxidation catalyst (NO oxidation catalyst) 3 serving as a first oxidation catalyst, a selective catalytic reduction catalyst (SCR catalyst) 4, an ammonia oxidation catalyst 5 serving as a second oxidation catalyst and a diesel particulate filter (DPF) 6. The NO oxidation catalyst 3, the SCR catalyst 4, the ammonia oxidation catalyst 5 and the DPF 6 are all disposed in the exhaust pipe 2 through which exhaust gas discharged from the diesel engine 1 flows. An injection nozzle 7 for injecting urea water is disposed between the NO oxidation catalyst 3 and the SCR catalyst 4 and in communication with a urea water tank 9 through a piping 8. The urea water tank 9 stores therein urea water. A urea water supply device 10 is disposed in the piping 8 and supplies urea water in the urea water tank 9 to the injection nozzle 7. Pressure sensors 11, 12 are disposed upstream and downstream of the DPF 6, respectively, for determining pressure differential between the upstream and downstream of the DPF 6. The urea water supply device 10 and the pressure sensors 11, 12 are electrically connected respectively to an electronic control unit (ECU) 14 serving as a controller of the exhaust gas purifying apparatus. The ECU 14 receives signals outputted from the pressure sensors 11, 12 for detecting pressure differential between the upstream and downstream of the DPF 6. The injection nozzle 7, the piping 8, the urea water tank 9 and the urea water supply device 10 form a urea water supply system for supplying urea water to the SCR catalyst 4.

The following will describe the operation of the exhaust gas purifying apparatus according to the preferred embodiment of the present invention. Exhaust gas discharged from the diesel engine 1 and flowing through the exhaust pipe 2 enters into the NO oxidation catalyst 3. In the NO oxidation catalyst 3, nitrogen monoxide (NO) in the exhaust gas is oxidized to form nitrogen dioxide (NO₂). Then, the exhaust gas flows into the SCR catalyst 4. The ECU 14 is operated to activate the urea water supply device 10 at an appropriate timing thereby to supply urea water stored in the urea water tank 9 to the injection nozzle 7 through the piping 8, and then the urea water is supplied to the SCR catalyst 4 from the injection nozzle 7. The urea water supplied to the SCR catalyst 4 is hydrolyzed to form ammonia and carbon dioxide, and then the ammonia and nitrogen oxides (NO_{X}) in exhaust gas are reacted to form nitrogen and water. If the ammonia is not sufficiently reacted or not consumed in the SCR catalyst 4, it is forwarded to the ammonia oxidation catalyst 5 and oxidized therein. Subsequently, the exhaust gas flows into the DPF 6, and particulate matter (PM) in the exhaust gas is deposited on the DPF 6. Thus, NO_{X} in exhaust gas is reduced, PM is removed from the exhaust gas, and then the purified exhaust gas is discharged into the atmosphere.

If PM in exhaust gas continues to be deposited on the DPF 6 while the diesel engine 1 is operated, the pressure differential between the upstream and downstream of the DPF 6 is increased. When the pressure differential determined by the pressure sensors 11, 12 reaches a predetermined value that is stored in the ECU 14, the ECU 14 is operated to start the regeneration of the DPF 6. When starting the regeneration of the DPF6, the ECU 14 is operated to stop the operation of the urea water supply device 10, so that supply of urea water is stopped during the regeneration of the DPF 6. In other words, the ECU 14 stops supplying the urea water from the urea water supply device 10 for regenerating the DPF 6. Thus, NO₂ formed in the NO oxidation catalyst 3 is not reduced in the SCR catalyst 4 and then directly flows into the DPF 6. NO₂ having strong oxidizing properties functions as an oxidizing agent for oxidizing PM in the DPF 6. In the presence of NO₂, PM may be oxidized thereby at a relatively low temperature. Therefore, when the diesel engine 1 continues to be operated and the temperature of exhaust gas is increased, PM deposited on the DPF 6 may be accordingly oxidized without increasing the temperature of exhaust gas by supplying diesel fuel to exhaust gas to oxidize the diesel fuel in oxidation catalyst. The ECU 14 stops supplying the urea water from the urea water supply device 11 in a condition where the temperature of the exhaust gas is as high as the temperature that the NO₂ functions as the oxidizing agent in the DPF 6.

When the regeneration of the DPF 6 is completed, the ECU 14 resume to activate the urea water supply device 10 again to supply urea water to the SCR catalyst 4 at an appropriate timing. Thereafter, the above-described operation is repeated for regenerating the DPF 6.

In the regeneration of the DPF 6, by way of stopping the supply of urea water from the injection nozzle 7, NO₂ formed in the NO oxidation catalyst 3 and then flowed into the SCR catalyst 4 functions as an oxidizing agent to oxidize PM deposited on the DPF 6. Thus, PM may be oxidized at a relatively low temperature, so that there is no need to oxidize diesel fuel in oxidation catalyst thereby to increase the temperature of exhaust gas. As is apparent from the foregoing, stop of supplying urea water during the regeneration of the DPF 6 improves the efficiency in the use of urea water and there is no need to supply diesel fuel to exhaust gas, with the result deterioration of fuel economy may be prevented.

An exhaust gas purifying apparatus includes an exhaust pipe, a first oxidation catalyst, a selective catalytic reduction (SCR) catalyst, a urea water supply system, a particulate filter (PF) and a controller. Exhaust gas discharged from an internal combustion engine flows through the exhaust pipe. The first oxidation catalyst is disposed in the exhaust pipe. The SCR catalyst is disposed in the exhaust pipe downstream of the first oxidation catalyst. The urea water supply system supplies urea water to the SCR catalyst. The PF is disposed in the exhaust pipe downstream of the SCR catalyst. The controller stops supplying the urea water from the urea water supply system during regeneration of the PF, so as to supply the NO₂ formed in the first oxidation catalyst to the PF, wherein the NO₂ functions as an oxidizing agent to oxidize particulate matter (PM) deposited on the PF for regenerating the PF.

## Claims

1. An exhaust gas purifying apparatus comprising;
an exhaust pipe (2) through which exhaust gas discharged from an internal combustion engine (1) flows;
a first oxidation catalyst (3) disposed in the exhaust pipe (2), the first oxidation catalyst (3) generates nitrogen dioxide;
a selective catalytic reduction catalyst (4) disposed in the exhaust pipe (2) downstream of the first oxidation catalyst (3);
a urea water supply system (7, 8, 9, 10) supplying urea water to the selective catalytic reduction catalyst (4);
a particulate filter (6) disposed in the exhaust pipe (2) downstream of the selective catalytic reduction catalyst (4); and
a controller (14) for controlling the urea water supply system (7, 8, 9, 10),
**characterized in that** the controller (14) stops supplying the urea water from the urea water supply system (7, 8, 9, 10) during regeneration of the particulate filter (6), so as to supply the nitrogen dioxide formed in the first oxidation catalyst (3) to the particulate filter (6), wherein the nitrogen dioxide functions as an oxidizing agent to oxidize particulate matter deposited on the particulate filter (6) for regenerating the particulate filter (6).

2. The exhaust gas purifying apparatus according to claim 1, **characterized in that** the exhaust gas purifying apparatus further includes a second oxidation catalyst (5) disposed in the exhaust pipe (2) between the selective catalytic reduction catalyst (4) and the particulate filter (6).

3. The exhaust gas purifying apparatus according to claim 1 or 2, **characterized in that** the exhaust gas purifying apparatus further includes a pressure sensor (11, 12) and the controller (14) receives a signal outputted from the pressure sensor (11, 12) for detecting pressure differential between the upstream and downstream of the particulate filter (6), wherein the controller (14) stops supplying the urea water from the urea water supply system (7, 8, 9, 10) when the pressure differential reaches a predetermined value.

4. The exhaust gas purifying apparatus according to any one of claims 1 through 3, **characterized in that** the urea water supply system (7, 8, 9, 10) is activated to supply urea water to the selective catalytic reduction catalyst (4) when the regeneration of the particulate filter (6) is completed.

5. The exhaust gas purifying apparatus according to any one of claims 1 through 4, **characterized in that** the urea water supply system (7, 8, 9, 10) includes;
an injection nozzle (7) injecting urea water;
a urea water tank (9) storing urea water;
a piping (8) through which the injection nozzle (7) is in communication with the urea water tank (9); and
a urea water supply device (10) supplying urea water in the urea water tank (9) to the injection nozzle (7) and is disposed in the piping (8).

6. The exhaust gas purifying apparatus according to any one of claims 1 through 5, **characterized in that** the controller (14) stops supplying the urea water from the urea water supply system (7, 8, 9, 10) in a condition where the temperature of the exhaust gas is as high as the temperature that the nitrogen dioxide functions as the oxidizing agent in the particulate filter (6).

7. The exhaust gas purifying apparatus according to any one of claims 1 through 6, **characterized in that** the internal combustion engine is a diesel engine, and the particulate filter (6) is a diesel particulate filter.

8. A method for regenerating a particulate filter of an exhaust gas purifying apparatus, the apparatus includes an exhaust pipe (2) through which exhaust gas discharged from an internal combustion engine (1) flows, a first oxidation catalyst (3) disposed in the exhaust pipe (2), the first oxidation catalyst (3) generates nitrogen dioxide, a selective catalytic reduction catalyst (4) disposed in the exhaust pipe (2) downstream of the first oxidation catalyst (3), a urea water supply system (7, 8, 9, 10) supplying urea water to the selective catalytic reduction catalyst (4) and a particulate filter (6) disposed in the exhaust pipe (2) downstream of the selective catalytic reduction catalyst (4),
the method **characterized by**:
stopping supplying the urea water from the urea water supply system (7, 8, 9, 10) during regeneration of the particulate filter (6); and
supplying the nitrogen dioxide formed in the first oxidation catalyst (3) to the particulate filter (6), wherein the nitrogen dioxide functions as an oxidizing agent to oxidize particulate matter deposited on the particulate filter (6).
